# EUROPEAN PATENT SPECIFICATION

(11) **EP 4 079 492 B1**
(45) Date of publication and mention of the grant of the patent: **24.04.2024**
(21) Application number: 22164218.4
(22) Date of filing: 24.03.2022
(51) Int. Cl.: B29C 64/393, B33Y 50/02, B29C 64/165, B29C 64/153, B33Y 10/00, B22F 10/28

(54) **METHOD AND APPARATUS FOR DETERMINING THE ONSET OF MELTING OF A MATERIAL**
VERFAHREN UND VORRICHTUNG ZUR BESTIMMUNG DES SCHMELZBEGINNS EINES MATERIALS
PROCÉDÉ ET APPAREIL POUR LA DÉTERMINATION DU DEBUT DE LA FUSION D'UN MATÉRIAU

(30) Priority: 22.04.2021 GB 202105752
(43) Date of publication of application: 26.10.2022
(73) Proprietor: Stratasys Powder Production Ltd, London SW1H 0BL (GB)
(72) Inventor: DORINI, Gianluca, London, SW1H 0BL (GB)
(74) Representative: Pitchford, James Edward

(56) References cited:
- EP-A2- 1 634 694
- WO-A1-2017/012656
- WO-A1-2018/022001

## Description

### FIELD OF THE INVENTION

The present disclosure relates to a method for the determination of the onset of melting of a material provided in the form of a layer. The methods may find particular benefit in-situ for an apparatus for the layer-by-layer formation of three-dimensional (3D) objects from particulate material. A controller and an apparatus for applying the method, such as for calibrating a sensor to the melting point of a particulate material, are also disclosed.

### BACKGROUND

In applications for forming three dimensional objects from particulate material, such as so-called "print and sinter" or laser sintering processes, an object is formed layer-by-layer from particulate material that is spread in successive layers across a build surface. Each successive layer of the object is melted to fuse, or sinter, the particulate material over defined regions to form a cross section of the 3D object, in order to consolidate the material. In the context of particulate materials, the process of melting achieves fusion of particles. Typically such processes require accurate temperature control of the surface that is being processed to achieve high-quality uniform objects with well-defined properties. Temperature control requires use of a temperature sensor, such as a pyrometer or thermal camera, that detects the temperature of the surface of the layer being processed (the build bed surface). Detection may be continuous or intermittent during processing. For reliable process control from build to build or between different apparatus, it is desirable to have accurate knowledge of the onset of melting (or fusion) since control over the process of fusion is material dependent. Thus different materials may have different melting points. Likewise, the same materials treated or aged differently may display a shift in melting point. In "print and sinter" processes for example, often some of the powder is recycled and reused and the powder properties are liable to change as a result of ageing. It is therefore important to be able to identify which temperature measurements correspond to the onset of melting of a given particulate material used in the apparatus.

The onset of melting may be determined from characteristic changes in the rate of heating when monitoring time-temperature behaviour of a reference area within the build bed surface upon a heating procedure. This procedure may thus be carried out in-situ in the apparatus. In a conventional object build process a heat source is passed over the build bed to apply radiation to selectively fuse a cross section of the object. The selectivity of the heat source is achieved by choosing a spectrum of radiation that overlaps with or comprises the absorption spectrum of the material to be melted so as to be fused. For example, a radiation-absorbing fluid may be deposited over selected portions of the build bed surface so as to define the cross section of the object. The radiation-absorbing fluid readily absorbs radiation from the heat source if it is tuned to the absorber fluid absorption spectrum, leading to melting of the particulate material in the defined cross section. It has been found that the characteristic rate of change of the time-temperature curve typically varies gradually, which presents challenges in determining the onset of melting accurately from analysing single curves in isolation and obtaining an average.

An additional problem is that use of an infrared heat source tuned to the absorption peak of infrared radiation absorber poses several problems when used for the measurement of the onset of melting. The rate of heating by the heat source has to be reduced significantly for temperature increase small enough to allow detection of the onset of melting). This may, for example, comprise lowering the build bed surface so as to increase the distance between the build bed surface and a moveable heat source arranged to be moved back and forth across the build bed surface. The build bed is surrounded on its sides by container walls and supported on a piston moveable in the layer direction. Container walls are susceptible to distortions and thus when lowering the piston over a significant distance, the build bed surface deviates from an earlier alignment with the temperature sensor carried out at a normal build distance. Such misalignment might mean that the sensor is monitoring a region of the build bed surface that is not the hottest, which can lead to excessive melting of the particulate material. Improved methods are therefore required to accurately detect the onset of melting of the particulate material without causing excessive melting in the build bed to address the aforementioned problems. While the method, controller and apparatus and their variants disclosed herein are illustrated with reference to an apparatus for the layer-by-layer formation of 3D, they are generally applicable to determine the onset of melting in apparatus of material provided in layer form.

Background art is provided in WO 2018/022001 A1 and WO 2017/012656 A1.

WO 2018/022001 A1 discloses a method of calibrating a non-contact temperature measurement device in an additive manufacturing system, the method comprising: applying energy from a radiation source of the additive manufacturing system to heat a reference element, the reference element being thermally coupled to a temperature sensor; and comparing a temperature reading from the temperature sensor with data from the non-contact temperature measurement device to calibrate said device.

WO 2017/012656 A1 discloses a method comprising: sensing the temperature of a plurality of sub-regions of a portion of a layer of build material in an object generation apparatus; deriving a frequency distribution of sub-region temperatures; determining if the frequency distribution is bimodal; identifying, if the frequency distribution is not bimodal, a build material temperature zone, or if the frequency distribution is bimodal, a fusing build material temperature zone and a non-fusing build material temperature zone; and determining a nominal temperature of the at least one identified temperature zone.

### SUMMARY

Aspects of the invention are set out in the appended independent claims, while particular embodiments of the invention are set out in the appended dependent claims.

The following disclosure describes, in one aspect, a method for determining the onset of melting of a material; the method comprising: providing a layer of the material; defining a reference area within the layer of material; providing a temperature sensor and a heat source above the reference area, the temperature sensor comprising a plurality of pixels configured to monitor the temperature of the reference area; selecting a first pixel and a second pixel to form a first reference pair of pixels of the temperature sensor to detect the temperature of corresponding first and second regions within the reference area; operating the heat source to heat the reference area over a duration of time, while monitoring, using the reference pair of pixels, the temperature of the two regions, wherein the heat source causes a temperature difference between the two regions such that the first and second pixel detect respective different temperatures over the duration of time; and determining the onset of melting of the material from the evolution of the temperature difference over the duration of time.

In a second aspect, a controller is provided, the controller configured to carry out a method for determining the onset of melting of a material provided in form of a layer, and configured to: receive data defining a reference area comprised within the layer of material; select a first pixel and a second pixel to form a first reference pair of pixels of a temperature sensor arranged above the layer to detect the temperature of corresponding first and second regions comprised within the reference area; control a heat source to heat the reference area comprising the first and second regions over a duration of time, such that the heat source causes a temperature difference between the two regions and such that the first and second pixel detect respective different temperatures over the duration of time; control the temperature sensor to monitor the temperature of the two regions over the duration of time, using the reference pair of pixels; and to receive the outputs of the temperature sensor; determine from the outputs a temperature difference between the two regions from the different temperatures detected by the first and second pixels over the duration of time; and determine the onset of melting from the evolution of the temperature difference over the duration of time.

In a third aspect, an apparatus for the layer-by-layer formation of a three-dimensional object from particulate material is provided, the apparatus comprising: a build bed surface over which the object is to be formed; a particulate material distributor for providing a layer of particulate material over the build bed surface; a controller for defining a reference area within the layer of material; a heat source provided above the build bed surface; and a temperature sensor provided above the build bed surface and configured to monitor the temperature of the build bed surface; wherein the temperature sensor comprises a first pixel and a second pixel to form a first reference pair of pixels arranged to detect the temperature of corresponding first and second regions comprised within the reference area, and the outputs of which are arranged to be supplied to the controller to monitor the temperature of the first and second regions of the reference area; wherein the heat source is arranged to provide a temperature difference between the two regions such that the first and second pixel detect respective different temperatures over the duration of time; and wherein the controller is arranged to determine the onset of melting from the evolution of the temperature difference between the first and second regions over the duration of time.

### BRIEF DESCRIPTION OF THE DRAWINGS

Reference is now directed to the drawings, in which:
Figure 1 is a schematic cross-section of an apparatus configured to apply the method of determining the onset of melting according to an embodiment of the invention;
Figure 2 is a schematic cross-section of an apparatus for the layer by layer formation of object from particulate material configured to apply the method of the embodiment;
Figure 3A is a plan view of the build bed surface of the apparatus of Figure 2 and illustrating an elongate infrared heat source and an underlying reference area;
Figure 3B is a schematic cross-section of Figure 3, further illustrating the provision of a sub-reference area and position of the temperature sensor;
Figure 3C is a simplified version of Figure 3B illustrating the position of two regions Vi, V_{R} of the sub-reference area;
Figure 3D is a schematic cross section of the pixel array of the temperature sensor, indicating pixels Pᵢ, P_{R} corresponding to regions Vᵢ, V_{R} of the sub-reference area;
Figure 3E is a plan view of Figure 3D showing the area of the sensor array corresponding to the sub-reference area;
Figure 4 is a block diagram of method steps of the embodiment carried out by the apparatus of Figure 1;
Figure 5 is a block diagram of method steps of a variant of the embodiment as applicable to the apparatus of Figure 2;
Figure 6 is a schematic cross-section of the apparatus of Figure 2 illustrating an example field of view of the sensor with respect to the reference area;
Figure 7 is a schematic cross-section of the apparatus of a variant of Figure 2 in which the sensor has direct vision of at least part of the heat source; and
Figure 8 is a block diagram of a variant of Figure 5 illustrating additional steps of defining the sensor pixel array to monitor sub-reference area.

In the Figures, like elements are indicated by like reference numerals throughout.

### DETAILED DESCRIPTION

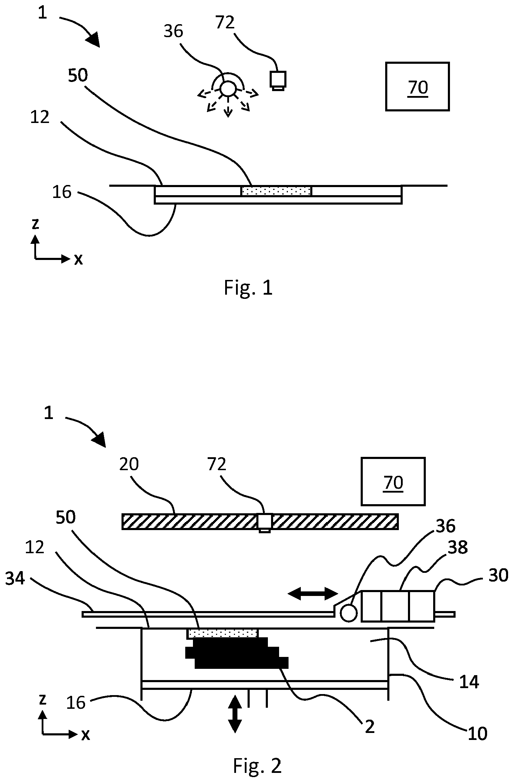

The method and associated apparatus and controller therefor will now be described with reference to Figures 1 to 8.

Figure 1 schematically illustrates detail of a cross section of an apparatus configured to carry out the method according to an embodiment. The cross section shows a front view through the layer of material 12 supported on a platform 16, a heat source 36 and a temperature sensor 72 of the apparatus 1. The layer of material for which the melting point is to be determined may be in solid form, or it may be provided in the form of a particulate material. The heat source 36 is arranged so as to heat a reference area 50 comprised within the layer of material and is here shown as a radiative heat source arranged above the layer of material 12. Alternatively, a resistive heat source arranged below the reference area may be used to heat the reference area 50. The temperature sensor 72 comprises pixels, each pixel arranged to monitor a corresponding region of at least the reference area 50. The heat source 36 may be arranged to heat the entire layer of material 12, and the sensor may be arranged to monitor the entire layer of material 12, i.e. it may have a pixel array positioned so as to monitor the entire layer surface.

The heat source 36 is configured to provide a temperature differential between the two regions as they are being heated. Such a temperature differential may be achieved in different ways, for example by a point source or an elongate heat source that, by its shape, generates a non-uniform heat profile on the layer surface because the first and second regions are located at respective different distances to the heat source 36, or for example by an array of heater elements configured to be controlled with individual power inputs.

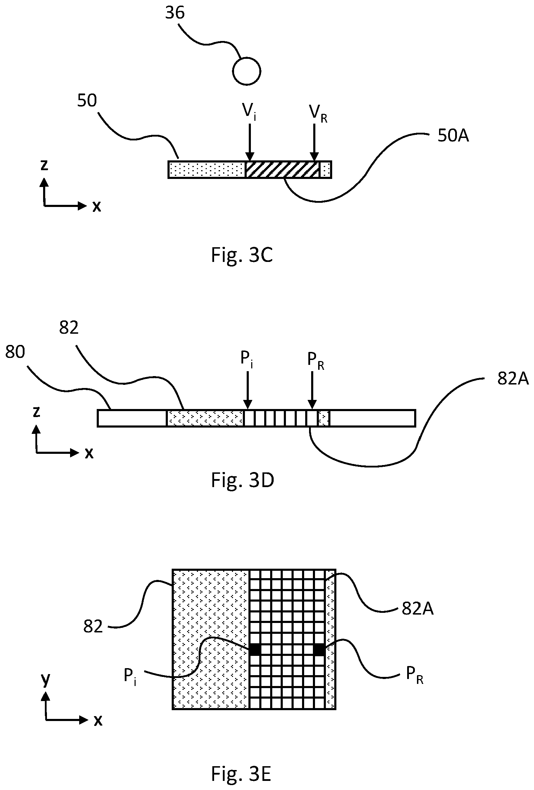

The pixels of the sensor are arranged so that a first and second reference pixel Pi, P_{R} (as will be illustrated with reference to Figure 3D for example) monitor a first and second region on the reference area 50 as the reference area 50 is being heated by the heat source 36 over a duration of time. The first and second regions are heated to a different temperature to one another at any given time over the duration of time due to the temperature differential on the layer created by the heat source 36. As a result, the first and second reference pixels detect different temperatures at specific points in time over the duration of time. In other words, at each point in time, over the duration of time, a temperature difference is determined between the detected temperatures detected by the first and second pixels. The onset of melting is determined from the evolution of the temperature difference over the duration of time. This means that over the duration of time the first and second regions are heated progressively by the heat source to progressively increase the temperature of each region, while multiple temperature measurements are taken by each of the first and second pixels Pᵢ, P_{R} of the temperature sensor 72. The heat source may provide a constant level of heating to the first and second regions over the duration of time so as to progressively heat the first and second regions. Preferably, both first and second regions undergo melting over the duration of time, however this is not essential. An alternative approach is described below. Over the duration of time, the heat source is preferably stationary above the layer 12 of material, as will be described below.

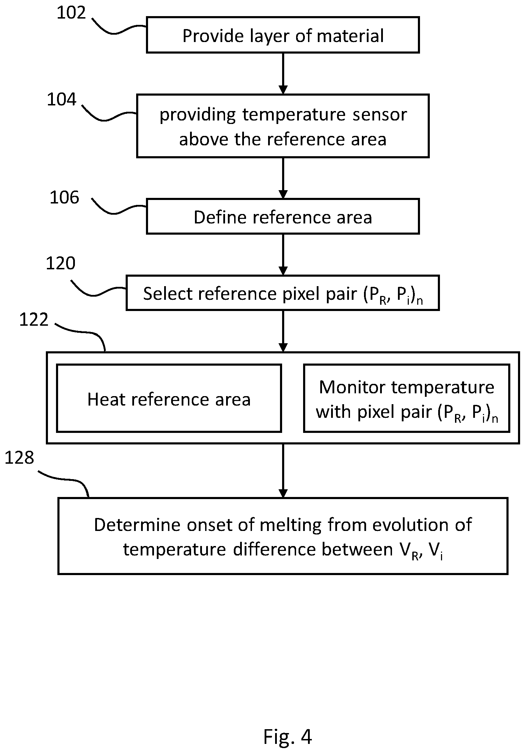

The method steps for determining the onset of melting of a material provided in the form of a layer is further illustrated by a block diagram in Figure 4:
At block 102, a layer of material 12 is provided. Next, a temperature sensor 72 is provided above the reference area 50 in block 104 and a reference area 50 is defined within the layer 12 at block 106. The temperature sensor may be fixedly provided in the measurement apparatus; in other variants it may be moveable. The temperature sensor 72 comprises a plurality of pixels P configured to monitor the temperature of some or all of the reference area 50.

At block 120, a first and second pixel Pᵢ, P_{R} forming a reference pair of pixels (Pᵢ, P_{R})₁ of the temperature sensor 72 is selected to monitor the temperature of corresponding first and second regions of the reference area 50.

At block 122, a heat source 36 is provided (or may be fixedly present in the measurement apparatus) and operated to heat the reference area 50 over a duration of time, while the reference pair of pixels (Pᵢ, P_{R})₁, monitors the temperature of the two regions of the reference area. The heat source causes a temperature difference between the first and second region Vᵢ, V_{R} of the reference area 50 such that the first and second pixel of the first reference pair (Pi, P_{R})₁ detect respective different temperatures from one another at specific points in time over the duration of time over which the first and second regions are being heated by the heat source. Operating the heat source over the duration of time comprises the heat source providing heat to each region so that the temperature of each region increases over at least some, and preferably over a majority, of the duration of time. The heat source is arranged to cause a temperature difference, which means that the heat input by the heat source is different between the two regions over the duration of time. Monitoring the temperature evolution of the two regions using the reference pair of pixels comprises sensing each region's temperature at different times over the duration of time while each region is being heated by the heat source. From the respective different temperatures between the two pixels at a specific time over the duration of time, the temperature difference between the first and second pixels is determined at specific points in time over the duration of time.

At block 128, the onset of melting of the material is determined from the evolution of the temperature difference between the first and second pixels over the duration of time.

The method may be applied in situ in an apparatus for the layer by layer formation of a 3D object from particulate material. Figure 2 illustrates a schematic cross-sectional front view and will be used to describe the method of determining the onset of melting in a type of powder bed fusion apparatus.

In a typical process for the layer-by-layer formation of a 3D object 2 from particulate material, successive layers of particulate material are distributed to form a build bed surface 12, analogous to the layer 12 of Figure 1 and thus similarly labelled, which is processed to form successive cross-sections of the object 2. The apparatus 1 comprises a powder container system which comprises a build bed 14 supported by container walls 10 and a build bed floor 16 and comprising the formed object 2. The platform 16 supporting the build bed (here build platform 16) is arranged to move vertically within the container walls 10 to lower or raise the build bed surface 12; for example it may be moved up and down by a piston located beneath the build bed floor.

A carriage 30 is movably arranged on one or more rails 34 to allow it to be moved back and forth across the build bed surface 12. The carriage 30 may comprise a fluid deposition module 38 for selectively depositing absorption-modifying fluid over the build bed surface 12. The same or a different carriage (not shown) may comprise a distributor module for distributing the particulate material across the build bed 14. A powder dosing module arranged to dose fresh powder to be distributed is also present but not shown. The same or a different carriage 30 may further support a moveable heat source 36. In a typical build sequence of an object cross section, the build bed floor 16 is lowered by a layer thickness and a dose of particulate material is distributed across the build bed surface 12. Printheads of the fluid deposition module 38 deposit fluid, for example containing radiation-absorbing material such as carbon black, at selected locations defined by the cross section of the object to be formed within the specific layer of distributed powder. After this, the moveable heat source 36, for example an infrared heat source spanning the width of the build bed surface 12, supported on a carriage 30, is passed across the build bed surface 12 to selectively heat and consolidate the powder that has received the radiation-absorbing fluid. In this illustrative process, the steps of lowering the build bed floor, distributing particulate material to form a new layer, printing and melting the defined area happen sequentially. Depending on the number of carriages and the modules they support, suitable sequences of travel of the carriages may be applied to support the steps of layer formation and selective consolidation.

An overhead heater 20 may be provided in the apparatus 1 to preheat the build bed surface 12 and to maintain the build bed surface 12 at a predefined temperature below the onset of melting. The overhead heater 20 may be operated at least partially based on temperature measurements of a temperature sensor 72 monitoring the temperature of part or all of the build bed surface 12. The sensor 72 may be located within the area of the heater 20, and may be configured to monitor part or all of the build bed surface 12. The temperature sensor 72 may be a thermal camera that captures time-dependent temperature maps of the build bed surface 12 over the duration of an object build process. The thermal maps are analysed and used to control the power outputs of the overhead heater array so as to ensure a uniform temperature profile of the build bed surface 12 during the process. The particulate material may be a polymeric material such as nylon PA11 and the temperature of the build bed is to be maintained between the melting temperature and the solidification temperature of the specific material. Thus it is important to ensure that the measurements taken by the sensor correspond to specific temperature characteristics of the material to allow adequate thermal control. During build procedures, the level of measurements of the sensor may change, for example due to contamination of a protective window protecting the sensor from the environment of the working space, or due to the temperature of the sensor environment; or the properties of the build material may change due to thermal cycling or provision of a new composition of particulate material. The sensor may be calibrated against the onset of melting as determined from the temperature-time characteristics of the particulate material.

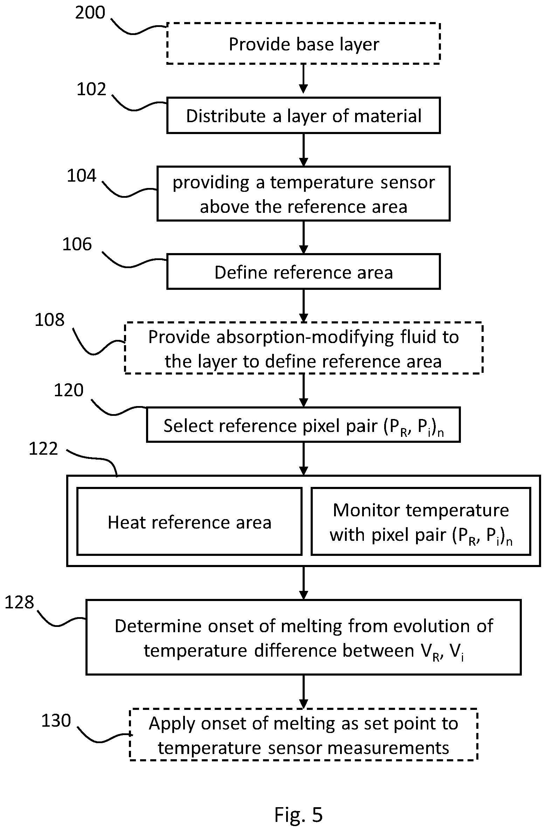

The method for determining the onset of melting of a particulate material provided in the form of a layer in situ in an apparatus for the layer-by-layer formation of a 3D object is illustrated in Figure 5, which is a block diagram illustrating the following method steps. In the apparatus for the layer-by-layer formation of a three-dimensional object from particulate material, (i.e. in this case the material is a particulate material), such as a powder bed fusion apparatus, the method may be used to apply a set point for subsequent measurements from the temperature sensor based on the determination of onset of melting of the particulate material. In this case, the layer of material may be provided by distributing the layer from a particulate material to form the build bed surface.

With reference to Figure 5, in which blocks with dashed outline are optional:
At block 102, a layer of material 12 is provided by distributing it across the build bed using a powder distributor to form a build bed surface 12. Next, a reference area 50 is defined comprised within the layer 12 at block 106. The temperature sensor 72 may be fixedly provided in the apparatus at block 104 (it may be provided at the start of the block diagram or at any point before block 120) and comprises a plurality of pixels P configured to monitor the temperature of some or all of the reference area 50.

The reference area 50 may be defined by depositing an absorption-modifying fluid over the build bed surface 12, for example by depositing radiation absorber across the reference area 50. This is indicated at optional block 108.

However, where a base layer is provided which defines a base reference area, the base reference area in turn defining the reference area, absorption modifying fluid may not be provided to the reference area. Hence this step is optional depending on the specific layer sequence for defining the reference area 50.

Block 120, a first reference pair of pixels (Pi, P_{R})₁ of the thermal sensor 72 are selected that are able to view two corresponding regions of a reference area.

Blocks 120 and 128 are as described for the block diagram of Figure 4.

Optionally, at block 130, the onset of melting as determined in block 128 may be applied to calibrate the temperature scale of the temperature sensor 72 for subsequent measurements of the temperature sensor in a subsequent object formation process.

### Pixel selection

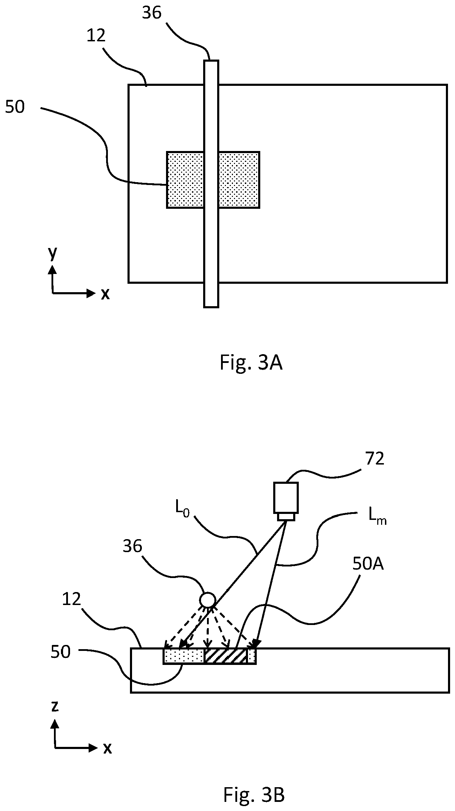

Turning now to Figures 3A to 3E, the step of selecting the first reference pair of pixels (Pi, P_{R})₁ of the thermal sensor 72 will be described with reference to the apparatus of Figure 2. However, it is equally applicable to the apparatus of Figure 1, where the layer 12 of Figure 1 is analogous to the build bed surface 12 of Figure 2 (equal reference numerals indicating like or analogous element or features). The method of determining the onset of melting equally applies to material provided in powder form or in solid form; however it will be clear that for the apparatus in Figure 2 the material is generally provided in powder, or particulate, form.

Figure 3A is schematic plan view of the build bed surface 12 from above. Positioned above the build bed surface 12 is a heat source 36 and located centrally above a reference area 50. Area 50 may be defined by radiation absorbing fluid previously before the heat source 36 is provided in position. In this view, which may represent a detail of Figure 2, the heat source 36 is an elongate heat source spanning the width of the build bed surface 12 in the y-direction. The heat source 36 is moveable in the direction along x, for example, by being mounted to a carriage 30 (not shown in Figure 3A).

In a side view of Figure 3A, Figure 3B illustrates the heat impact of the heat from the heat source 36 over the reference area 50. The longer the radial distance from the heat source to the surface of the reference area 50, the lower the impact. This is indicated in Figure 3B by arrows of different length. Thus the heat source, when operated, generates a temperature differential along the x-direction of the reference area 50, perpendicular to the direction of extension of the heat source along the y-direction. Also illustrated is a temperature sensor 72 positioned above the build bed surface 12, for example centrally as shown. The sensor 72 in this example is able to view directly past the heat source so as to be capable of monitoring regions of the reference area that extend to locations beyond the direct reference area underneath the heat source. This is indicated by a far line of sight L₀ of a corresponding sensor pixel P₀, which is an extreme location beneath the heat source that is accessible by the sensor in this configuration. A further corresponding pixel Pm corresponds to the near edge of the reference area 50 as indicated by a near line of sight Lₘ. The sensor 72, heat source 36 and reference area 50 within the build bed surface 12 are thus positioned so that the sensor 72 is capable of monitoring at least a sub-reference area 50A comprised within an area extending along x from the far line of sight location L₀. The locations of the line of sights may correspond to distinct pixels, or to groups of pixels, in the sensor pixel array.

The heat source 36, or at least part of it, may be directly visible to the sensor 72. For example, the housing of the heat source may be removed for the measurement of the onset of melting. In some apparatus the housing roof may be partially or fully open to allow heat to escape, in which case the sensor 72 is able to view underneath and past the heat source without obstruction due to a housing.

During the time over which the sensor is operated to take measurements to allow determination of the onset of fusion, the sensor pixels that are used to monitor the temperature may be pre-defined. This may reduce the processing time and may allow defining a thermal condition on the reference area 50 at which the heating process is to be stopped. For example, it may be desirable to monitor the region that receives the highest energy and is the hottest region of the reference area 50 so as to control the duration of time over which the reference area 50 is being heated, so as to prevent excessive melting of underlying layers and areas surrounding the reference area. Excessive melting will cause significant shrinkage and potentially curling of the melted area, leading to problems with continuing a normal build process on top of the reference area. Figure 3C focusses on the detail of the reference area 50 of Figure 3B and illustrates two regions Vi and V_{R} on the sub-reference area 50A within the reference area 50. In this example, Vi is a region that is the hottest since it located substantially directly beneath the source 36. It thus receives the highest power from the heat source 36 by being closest to it compared to other regions along the x-direction. V_{R} is located further away along x and will receive less heat compared to Vi. Thus the heat source 36 causes a temperature differential between regions Vi and V_{R}.

Figure 3D is a schematic cross section of the pixel array 80 of the temperature sensor 72. The location of the pixel array with respect to the build bed surface 12 in this example is such that the array can image the entire build bed surface 12, however this is not essential for carrying out the methods described herein. The pixel array may be a matrix P(i,j) of individual detector pixels arranged in *i* columns and *j* rows. Each detector pixel may be assigned to a corresponding region on the build bed surface 12, as will be described in this example. However, alternatively, groups of neighbouring pixels may be assigned to a specific region instead, and an average temperature determined from the group of detector pixels may be used to represent the temperature of the specific region.

In Figure 3D, a reference array of pixels 82 of the matrix 80 is indicated to correspond to the reference area 50 on the build bed surface 12. Within the reference array of pixels 82, a sub-array 82A is indicated to correspond to the area of the sub-reference area 50A, and pixels Pi and P_{R} are defined to correspond to regions Vᵢ and V_{R} of Figure 3C. These two pixels represent the first pixel pair (P_{R}, Pᵢ)₁ that is used to monitor the temperature increase of the respective two regions Vᵢ and V_{R} of the sub-reference area 50A while the reference area 50 is being heated. The first pixel pair (P_{R}, Pᵢ)₁ is shown to be located along the same pixel row, and along the direction of the temperature differential generated by the heat source, however this is not strictly necessary as long as a temperature differential exists between pixels (P_{R}, Pi) the first pixel pair (P_{R}, Pi)i.

When the heat source 36 is operated to heat the reference area 50, or at least the sub-reference area 50A, each pixel detects the time-temperature behaviour individual to the respective region Vᵢ, V_{R}. From determining a characteristic in the difference in temperature over the duration of time between the two regions as detected by the respective pixels, or in other words from a characteristic in the evolution in temperature difference between the two regions, the onset of melting may be determined.

Figure 3E further illustrates that, by way of providing a sub-array of pixels, a plurality of pixel pairs (P_{R}, Pᵢ)ₙ may be defined to monitor respective regions (V_{R}, Vᵢ)ₙ such that the onset of fusion may be determined based on an average of the results from a plurality of pixel pairs.

In variants of the methods described in relation to the apparatus of Figures 1 and 2, the pixel Pi may not correspond to the hottest region on the sub-reference area 50A as indicated in Figures 3C to 3E. Instead, it may be chosen to monitor any other region on the reference area 50, or sub-reference area 50A, as long as a temperature differential exists between the first and second region monitored by the first and second pixels of the specific pixel pair. The hottest region may be monitored by a separate reference pixel chosen to detect a maximum temperature, based on which the heating process is stopped so as to avoid excessive melting of the particulate material. The controller indicated in Figures 1 and 2 may be configured to acquire the detected temperatures of the pixel pairs, and optionally of the reference pixel monitoring a direct reference region within the direct reference area, and to control the duration of time based on the data received from the reference pixel and it may further be configured to determine the onset of melting from a characteristic in the evolution in temperature difference between the two regions. The 'characteristic' may be a distinctive change and/or distinctive condition in the behaviour of the difference between measured temperatures for the first and second pixel over the duration of time (of the "evolution in temperature difference") that indicates the onset of melting. Preferably, the two regions undergo full melting in the course of the duration of time over which they are being heated. This means that in general, the temperature of each region increases over the duration of time. As a region undergoes melting, the latent heat of fusion causes a change in the rate of change of temperature detected by the sensor as it monitors the region over time. The temperature differential and the rate of heating may be chosen so as to allow accurate determination of the onset of melting of the particulate material. Decreasing the rate of heating and/or the starting power of the heat source may provide improved results.

In the embodiment and variants described herein, the sub-reference area 50A may be an area smaller than the reference area 50, for example for reasons of alignment, however the sub-reference area 50A may be the same size and coincide with the reference area 50. The term `sub-reference area' has been introduced to clarify that it is not necessary to monitor the entire reference area 50. In some variants therefore the sub-reference area and the reference area may relate to the same area. In other variants it is not necessary to monitor the entire reference area, nor the entire sub-reference area; the regions to be monitored may be determined based on, for example, the resolution of the sensor array, processing limitations of the data necessary to determine the onset of the melting e.g. where this may be required in real time, or the accuracy of measurement required.

### Apparatus and Controller

The methods herein described may be carried out by the apparatus of Figure 1, wherein the apparatus 1 comprises a platform 16 on which a layer of material is provided; a controller 70 for defining a reference area 50 within the layer of material; a heat source 36 (or 20 as shown in Figure 2) and a temperature sensor 72 both provided above the platform 16, wherein the sensor 72 is configured to monitor the temperature of the reference area 50.

The temperature sensor 72 comprises a first pixel and a second pixel to form a first reference pair of pixels (P_{R}, Pi)i arranged to detect the temperature of corresponding first and second regions V_{R}, Vi comprised within the reference area 50, and, the outputs of which are arranged to be supplied to the controller 70 to monitor the temperature of a corresponding first and second region V_{R}, Vᵢ (as described with reference to Figure 3C to 3E) of the reference area 50. The heat source 36, 20 is arranged to provide a temperature differential (temperature difference) between the two regions V_{R}, Vi such that the first and second pixel detect respective different temperatures over the duration of time. The controller is further arranged to determine, from the outputs of detected temperatures of the first and second pixels P_{R}, Pi, the onset of melting based on the evolution of the temperature difference between the first and second regions V_{R}, Vi over the duration of time.

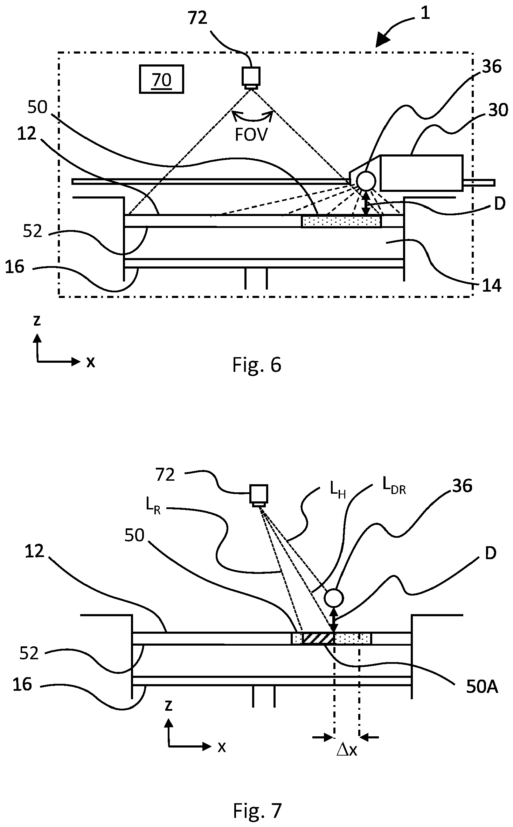

The apparatus 1 and controller 70 will be illustrated in more detail with reference to the powder bed fusion apparatus described with reference to Figure 2 and Figures 3A-3E and suitable to carry out variants of the method described with reference to the block diagram of Figure 5 and using features typically present in such apparatus. This will now be described with reference to Figures 6 to 8.

Turning first to Figure 6, the apparatus 1 for the layer-by-layer formation of a three-dimensional object from particulate material comprises a build bed surface 12 over which the object (not shown) is to be formed. The apparatus comprises a particulate material distributor (not shown) for providing a layer of particulate material over the build bed surface 12; a controller 70 for defining a reference area 50 within the layer of material; a heat source 36 (or 20 as shown in Figure 2) provided above the build bed surface 12 and which in this example is supported on a carriage 30 arranged to be moved back and forth over the build bed surface 12 parallel to the x-direction. A temperature sensor 72 is provided above the build bed surface 12 and is configured to monitor the temperature of the build bed surface 12. The temperature sensor 72 comprises a first pixel and a second pixel to form a first reference pair of pixels (P_{R}, Pi)i arranged to detect the temperature of corresponding first and second regions V_{R}, Vi comprised within the reference area 50, and, the outputs of which are arranged to be supplied to the controller 70 to monitor the temperature of a corresponding first and second region V_{R}, Vi (as described with reference to Figure 3C to 3E) of the reference area 50. The heat source 36, 20 is arranged to provide a temperature differential (temperature difference) between the two regions V_{R}, Vi such that the first and second pixel detect respective different temperatures over the duration of time. The controller is further arranged to determine, from the outputs of detected temperatures of the first and second pixels P_{R}, Pi, the onset of melting based on the evolution of the temperature difference between the first and second regions V_{R}, Vi over the duration of time.

The apparatus may further comprise a fluid deposition unit (not shown in Figure 6, but may for example be present on carriage 30) configured to apply absorption-modifying fluid onto regions of the build bed surface 12 to define the reference area 50. For example, the fluid deposition unit may be configured to apply radiation absorber over the reference area 50 so as to define it to be fused.

The heat source 36, 20 is arranged to provide the temperature differential between at least two regions of a sub-reference area 50A (as indicated in Figure 7, which is a simplified representation of elements of apparatus of Figure 6 focussing on the reference area, the heat source and the sensor) comprised within the reference area 50. The controller 70 is configured to select the two pixels P_{R}, Pᵢ of the first reference pair (P_{R}, Pᵢ)₁ to correspond to a respective region V_{R}, Vi within the sub-reference area 50A. For example, the temperature differential may be generated in one direction over the sub-reference area 50A and the first and second regions V_{R}, Vi are located along that direction. For example, for an elongate heat source 36 such as shown in Figures 3A and 3B, the temperature differential is created along the direction that extends along x, due to the power distribution of the heat radiated about the axis extending along the direction of elongation of the heat source 36. In some variants, the heat source may be a segmented elongate heat source with individually addressable segments and the controller 70 is configured to address each segment with an individual power signal so as to create differences in temperature on the reference area.

In other variants, the heat source 36, 20 may comprise an array of heat sources (or heating elements) above the build bed surface 12, each heating element addressable with individually controllable power outputs so as to be able to generate a temperature difference between the first and second region V_{R}, Vi. The array of heat sources may be implemented in form of the moveable source 36. Alternatively, the array of heat source may be fixedly mounted above the build bed surface in the form of the overhead heater 20. The controller 70 may address each heater element so as to vary the temperature across the reference area 50 gradually.

Alternatively, the heat source may be a spot source, or a heat source that does not extend over the entirety of the build bed surface 12 in the y-direction, so as to cause or generate a temperature differential in a plurality of directions across the reference area 50.

The sensor may comprise a plurality of pixel pairs, such as where the sensor is a thermal camera having a pixel array of temperature detectors, the plurality of pixel pairs corresponding to a plurality of respective first and second regions of the reference area; and wherein the controller 70 is configured to receive the outputs from the plurality of pixels and to determine the onset of melting based on the sensor outputs from the plurality n of pixel pairs (P_{R}, Pᵢ)ₙ. The outputs in this case may be received in the form of a thermal image from which the output for each pixel may be extracted.

In a conventional sensor array, the plurality of pixels are arranged in rows and columns, and the method carried out by the controller may further comprise selecting a plurality of pixel pairs, each pixel pair arranged to monitor the temperature of two respective regions of the sub-reference area 50A; wherein the heat source is arranged to provide a temperature differential between the two regions of each pixel pair such that the two pixels of the first reference pair detect different temperatures from one another; and determining the onset of fusion based on the plurality of results for the onset of fusion as determined for each pixel pair.

In some variants of the apparatus, the temperature differential may be created along one direction only, for example along the x-direction, and the rows of sensor pixels may be parallel to that direction. The heat source may be arranged to cause a unidirectional temperature differential across the reference area 50, and optionally, each pixel row of the sensor array 80 may extend substantially parallel to the direction along which the unidirectional temperature differential subsists. In a simple implementation of the method, the controller 70 may select the first and second pixels of the first reference pair from the same pixel row of the array of pixels. Optionally, each pair of the plurality of pixel pairs corresponding to regions within the reference area 50, or within the sub-reference area 50A, may be selected from one of the pixel rows. For example, each pixel pair may be selected from a row different to that from which any of the other pixel pairs are selected. Alternatively, the pixel pairs may be distributed across a sub-array 82A corresponding to the sub-reference array 50A so that some pairs are selected from different rows and some are selected from the same row. The first pixel of a reference pair may also be selected as the first pixel of further reference pairs. In other words, the first pixel may be the first pixel of a plurality of pixel pairs corresponding to a plurality of first and second regions, and the onset of melting is determined from the evolution of the temperature difference from each first and second pixel of each region. The heat source may be a moveable heat source 36 arranged to be moved across the build bed surface 12, wherein at least a portion of the moveable heat source is in direct line of sight L_{H} of the temperature sensor 72 at least when the moveable heat source is positioned in a test position above the build bed surface.

The first pixel P_{R} may be chosen to correspond to a region that will be relatively cooler than a region corresponding to the second pixel, by being located further away from the heat source, as indicated in Figure 3D and 3E.

In some variants, each pixel of the sub-array 82A is assigned to a pixel pair, so that all pixels of the sub-array 80A are used to monitor the increase in temperature over all regions of the sub-reference area 50A.

In other words, more than one pixel pair may be chosen from the same row of pixels of the array to monitor respective regions of the sub-reference area 50A.

As stated before, it is not necessary that the first and second pixel of the pixel pair, or of any of the pixel pairs, fall onto one of the rows of the sensor array. The first pixel may fall onto a different row from the second pixel, as long as a temperature differential exists between the first and second regions V_{R}, Vi corresponding to the first and second pixels P_{R}, Pi of the first pixel pair (P_{R}, Pi)i.

In variants of the method, and with reference to Figure 5, before block 102 of distributing a layer of particulate material to form the build bed surface 12, in a sequence indicated by optional block 200, a base reference area may be created to define the reference area. The provision of a base layer comprising such a base reference area comprises the steps of
- distributing a base layer of particulate material over the build bed to form the build bed surface 12;
- applying radiation-absorbing fluid to a base reference area comprised within the base layer, wherein the base reference area overlaps at least partially with the reference area; and
- melting the particulate material of the base reference area using the heat source, and optionally repeating steps (a) to (c) one or more times.

This sequence requires a droplet deposition module, as may be present to carry out the step in block 108. The droplet deposition module is configured to deposit absorption-modifying fluid in the form of radiation absorbing fluid onto the base reference area so as to define it. The step of melting the particulate material of the base reference area so as to fuse it may be carried out by the same heat source used to heat the reference area 50, for example moveable heat source 36. Where a base reference area is provided, the base reference area represents stored heat and defines the reference area 50 by the stored heat, so that the reference area may not require any radiation absorber itself. This may be used to slow the rate of heating of the reference area in block 122. The reference area 50 in this case is thus coincident with and defined by the underlying base reference area.

When the heat source 20, 36 is operated to apply radiation to the reference area 50 (or the build bed surface 12 as a whole), the area surrounding the reference areas heats up more slowly than the reference area due to the presence of the underlying base reference area.

Additionally, or instead, the rate of heating of the reference area 50 may be reduced and the accuracy of determining the onset of melting may be improved by one or more of the following:
- The duty cycle of the heat source. The moveable heat source may be operated at or near 100% duty cycle during a normal build process, which may be reduced as necessary.
- The amount of radiation-absorbing fluid deposited over the reference area may be reduced to reduce the amount of heat absorbed by the heat source.
- For a scanning heat source, the velocity of the heat source may be increased to lower the power impact on the build bed surface 12.

### Lowered build bed surface

In apparatus 1 where the heat source is a moveable heat source 36 configured to be moved across the build bed surface, for example by being mounted on a carriage 30 moveable back and forth across the build bed surface 12 along the process direction x, typically the distance between the heat source and the build bed surface for a typical sequence over which the object is being built (herein called the `build distance') is small, for example less than 5 mm, so as to ensure efficient heating of the object cross sectional areas to be fused. During the step of applying heat to the reference area 50, this distance may be too short to prevent excessive heating, and/or to ensure accuracy of measurement.

The heat impact of the moveable heat source may be reduced for the duration of heating the reference area by increasing the distance between the build bed surface 12 and the heat source 36 to an extended distance D greater than the typical build distance. Figure 6 illustrates a build bed that has been lowered to an extended depth, defining an extended distance D as indicated, where the extended distance D is greater than the build distance. This may be achieved by operating the piston 16 configured to move the build bed floor 16 up and down, vertically along the z-direction, to lower the build bed surface. The extended distance D may be determined so as to sufficiently reduce the heat impact of the heat source on the build bed surface 12, to prevent excessive melting and improve accuracy of measurement by extending the duration of time over which the reference area is heated, allowing an increased number of measurements taken by the one or more pixel pairs. For example, a 3kW infrared heat source may be operated at less than 30% at an extended distance of 70 mm or more.

As described above, the heat applied to the reference area 50 may be applied by a moveable heat source 36. For the duration of time of applying heat to the reference area 50, the moveable heat source may be passed repeatedly back and forth ('scanned') across the reference area or over the entire build bed surface 12 so as to gradually provide sufficient energy to the reference area 50 that the particulate material of the reference area melts. The heat source in this mode may be operated at increasing or decreasing duty cycle to generate the differential temperature profile across the reference area. In addition, to reduce the rate of heating for better accuracy of measurement, the distance of the heat source with respect to the build bed surface may be adjusted (e.g. the build bed surface may be raised or lowered); the duty cycle of the heat source for achieving melting of an object build layer and/or the speed of travel of the heat source and/or the amount of radiation absorber per unit area in the reference area may be adjusted. Using this approach of heating however, a degree of extrapolation of the time-temperature data is required to account for the repeated passes of the heat source during which the reference area is cyclically heated, and where the temperature sensor that is arranged in a fixed position above the build bed surface 12, for the heat source intermittently obstructing the sensor's view of the reference area. Therefore, while using a scanning heat source is a further, or alternative, way of reducing the heat impact of the heat source, it adds additional challenges to the data analysis.

To avoid such challenges, the heat source 36 may instead be moved to a test position at which the step of heating the reference area is carried out while the heat source 36 remains stationary for the duration of time of the measurements by the temperature sensor 72. When using this approach, the additional step of lowering the build bed surface may be beneficial to reduce the heat impact of the heat source 36 on the build bed surface 12.

A variant of the method in a powder bed fusion apparatus 1 using a moveable heat source 36 that remains stationary above the build bed surface 12 for the duration of time over which the reference area is being heated will now be described.

Figure 6 shows a layer 52 above which the moveable heat source 36 is provided for the step of heating the reference area 50. In this Figure, the build bed surface has been lowered to an extended depth that defines an extended distance D between the build bed surface 12 and the heat source 36.

Furthermore, the moveable heat source 36 has been moved to a test position, which is a position in which the heat source remains for the duration of the time over which it heats the reference area 50. Based on the position of the temperature sensor 72 with respect to the build bed surface, the position of the reference area 50, the test position and the extended distance D are chosen so as to allow the one or more pixel pairs of the sensor 72 to view the sub-reference area 50A, wherein the sub-reference area 50A comprises a direct reference area receiving the highest energy input from the heat source. The sensor's field of view FOV may comprise the entire reference area 50, and/or the reference area 50 may be symmetrically arranged below the heat source 36.

Figure 7 shows a variant arrangement of the reference area 50 and heat source 36 of Figure 6 in more detail, in which the heat source 36 is centrally arranged above the reference area 50, with respect to the x-direction, so that the reference area 50 extends substantially symmetrically to both sides of the direct reference area located substantially directly underneath the heat source 36. Further indicated is the sub-reference area 50A to be monitored by pixels of the sensor 72. The reference area 50 may have been defined by depositing radiation absorbing fluid over it before the build bed surface 12 is lowered, for example by providing a droplet deposition module on the carriage 30 and moving the carriage across the build bed surface 12 while the droplet deposition module deposits radiation absorber on the build bed surface to define the reference area. The heat source 36 may be elongate and span the width of the build bed surface 12, so that the reference area 50 receives substantially the same level of heating from the heat source 36 along a line of constant distance between the powder bed surface 12 and the heat source 36. In this way, a plurality of pixel pairs may be chosen that correspond to pairs of respective regions that substantially receive the same temperature differential, and the duration of time over which the regions need to be heated to determine a characteristic of the evolution of the temperature difference between the regions may be substantially the same. This allows for a plurality of measurements and increased accuracy in the determination of the onset of melting. Optionally, at least a portion of the moveable heat source may be in direct line of sight L_{H} of the temperature sensor 72, such that the temperature sensor may detect the temperature of the heat source.

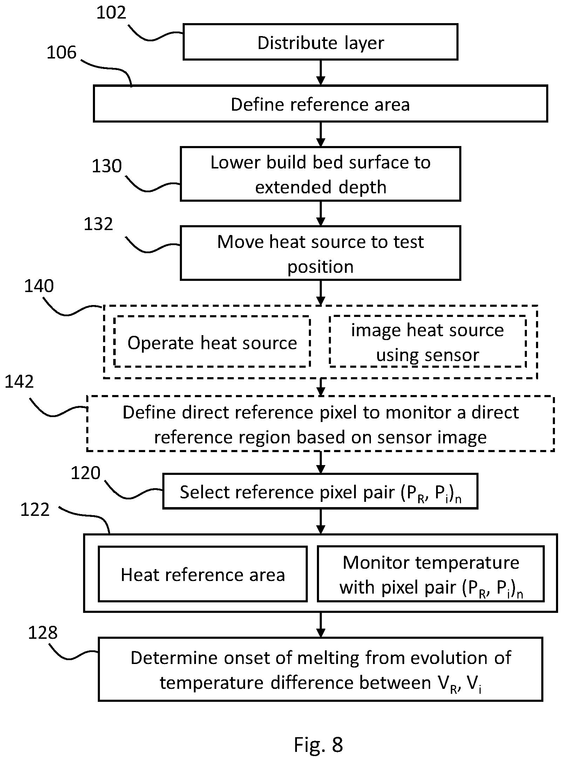

Figure 8 is a block diagram of steps of the method described with reference to the apparatus in Figures 6 and 7 and as may be carried out by the controller 70, in which the heat source is a moveable heat source positioned in the test position and remaining stationary for the duration of time over which it is operated to heat the reference area 50. A temperature sensor 72 is provided above the reference area 50, the sensor comprising a plurality of pixels and configured to monitor the temperature of the reference area 50.

Figure 8 shows at block 102 the distribution of the layer of material by a powder distributor, followed by block 106 of defining the reference area 50 within the build bed surface. Block 106 may involve the optional step 108 in the block diagram of Figure 5 of providing absorption modifying fluid to the layer 52 to define the reference area 50.

Following these steps, at block 130 the build bed is lowered to move the build bed surface 12 to the extended depth, defining extended distance D between heat source 36 and build bed surface 12 as indicated in Figure 6. Alternatively, where the set-up of the apparatus allows it, the heat source 36 may be raised away from the build bed surface 12 so as to define extended distance D between heat source 36 and build bed surface 12.

At block 132 the moveable heat source 36 is positioned in the test position ready for block 120 of selecting the reference pixel pair (P_{R}, Pi) and block 122 of heating the reference area 50 and monitoring the temperature of the pixel pair (P_{R}, Pᵢ). Blocks 130 and 132 are interchangeable in order and may happen sequentially or in parallel.

The remaining blocks are the same as described with respect to Figure 5.

The walls of the container containing the powder bed comprising the layers of particular material are susceptible to distortions, and thus when lowering the piston over a significant distance, the build bed surface 12 deviates from an earlier alignment with the temperature sensor, such as a thermal camera positioned to monitor the temperature of the build bed surface, carried out at a typical build distance. In order to compensate for misalignment and to ensure that the sensor is monitoring a region of the build bed surface 12 that is the hottest so as to control the duration of time over which the reference area 50 is being heated, additional alignment is necessary.

In apparatus in which a portion or all of the moveable heat source 36 is directly detectable by the temperature sensor, by some or all of the heat source being in the direct line of sight L_{H} of the sensor, the ability to directly image the heat source using the temperature sensor may be utilised to compensate for deviations along the x and y-directions after lowering the build bed surface 12, as follows:

With reference again to the block diagram of Figure 8, at block 132 the moveable heat source 36 is moved to the test position approximately above the reference area 50, wherein the reference area 50 is sized so as to provide the necessary tolerance based on known maximum deviation in the x and y directions (in the plane of the build bed surface 12). For this reason, the reference area 50 may be defined large enough size to ensure that in the case of a maximum potential deviation, the heat source can still be placed with adequate accuracy with respect to the reference area 50, and so that a sub-reference area 50A may be defined to fall within the reference area 50. In the test position, at least a portion of the heat source is in direct line of sight L_{H} of the sensor. In some apparatus this may be due to gaps in the roof of the housing of the heat source; in some apparatus the housing may have been removed. Furthermore, the heat source may also be in direct line of sight L_{H} of the temperature sensor in positions others than the test position.

At block 140, the moveable heat source is operated, for example at very low power or low duty cycle insufficient to cause significant heating of the reference area but sufficient to heat the heat source so that it becomes detectable by the temperature sensor. The temperature sensor 72 is operated to generate an image of the temperature of the moveable heat source 36 (or of portions of the moveable heat source 36 that are in the line of sight and therefore directly detectable to the sensor).

At block 142, based on the image provided by the sensor of the heat source 36 while in the test position, a direct reference pixel corresponding to a direct region within the reference area 50, wherein the direct region is located substantially beneath the movable heat source 36 and thus at the extended distance D from the heat source. This may be done for example by a calculation that takes into account the geometry of the apparatus, the extended distance D and the position of the heat source 36 above the build bed surface 12 based on an encoder position of the carriage 30. In Figure 7, location of the direct reference pixel is indicated by the direct line of sight L_{DR} of the sensor of the direct reference region. The location of reference pixel P_{R} may correspond to the line of sight L_{R} located at or near the edge of the sub-reference area 50A located further away from the heat source 36.

In some apparatus, the sensor may be moveable, and the position of the sensor may also be adjustable, for example as controlled by the controller 70, above the reference area 50 such that the sensor has a field of view that continuously comprises the direct reference area for the duration of time over which the reference area is being heated.

One or more direct reference pixels may be defined that correspond to respective direct regions of the direct reference area. The one or more direct reference pixels may be used to monitor the temperature of the direct region. In other words, the direct reference pixels are identified so as to be capable of measuring the hottest regions within the reference area that are located substantially directly underneath the heat source 36.

Based on the temperature of the direct region, the duration of time over which the reference area is heated may be determined based on a predetermined maximum temperature provided to the controller 70, and once detected by the direct reference pixel, the step of operating the heat source to heat the reference area at block 122 is terminated when the predetermined maximum temperature is detected by the direct reference pixel.

Following block 142, the block diagram proceeds through blocks 120 to 128 as described before. In block 120, first and second pixels of a plurality of pixels pairs may be selected that correspond to a plurality of respective regions to be monitored. For example, such regions may extend in opposite directions from the direct reference area beneath the heat source 36. The regions to be monitored may describe a sub-reference area 50A smaller than the reference area 50. The sub-reference area 50A may comprise the direct reference region, or area of regions, wherein the pixel pair of the first and second pixels, and optionally further pixel pairs, correspond to regions comprised within the sub-reference area.

The test position and /or the extended distance D may be adjusted to allow the sensor to view the direct reference area continuously over the duration of time.

The first and second pixel Pi, P_{R} of the pair of pixels may be chosen to correspond to regions Vi, V_{R} located further away from the heat source 36 than the direct reference region. Alternatively the direct reference pixel may be pixel Pi of the reference pair as indicated in Figures 3C to 3E. The predetermined maximum temperature is chosen such that the onset of melting can be reached by the first and second pixels before the step of heating at block 122 is terminated due to the reference pixel detecting the predetermined maximum temperature.

The various operations necessary to carry out the routines and their variants illustrated with reference to the block diagrams of Figures 4, 5 and 8 may be provided by the controller 70 of the apparatus as indicated in Figure 1, 2 or Figure 6. The controller 70 may generally be configured to do one or more of the following:
- receive data defining a base reference area, or a plurality of base reference areas, comprised within the layer of particulate material, in variants in which a base layer is present;
- receive data defining the reference area 50, or a plurality of reference areas, comprised within the layer, the layer optionally being formed of particulate material;
- select a first pixel and a second pixel to form a first reference pair of pixels of a temperature sensor arranged above the layer to detect the temperature of corresponding first and second regions comprised within the reference area;
- receive outputs from the temperature sensor comprising at least the pair of first and second reference pixels;
- control the heat source 20, 36 to heat the reference area 50 comprising the first and second regions over a duration of time, such that the heat source causes a temperature difference between the two regions and such that the first and second pixel detect respective different temperatures over the duration of time;
- control the temperature sensor to monitor, using the reference pair of pixels, the temperature of the two regions over the duration of time;
- receive the outputs of the temperature sensor;
- determine from the outputs a temperature difference between the two regions from the different temperatures detected by the first and second pixels over the duration of time;
- determine the onset of melting from the evolution of a temperature difference between the first and second regions as determined from the outputs of the first and second pixels;
- control the position of the moveable heat source above the build bed surface;
- lower the build bed surface to the extended depth, wherein the extended depth defines an extended distance D between the moveable heat source and the build bed surface greater than a build depth at which the object is built;
- move the moveable heat source 36 to a test position above the reference area where at least a portion of the heat source is in direct line of sight L_{H} of the sensor (i.e. the temperature of the heat source is directly detectable by the sensor); apply power to the moveable heat source 36 so as to heat the heat source such that it becomes visible to (detectable by) the temperature sensor 72 while preventing significant heating to the reference area 50; cause the temperature sensor 72 to generate an image of the temperature of the moveable heat source 36 above the build bed surface 12; and based on the image generated by the temperature sensor, determine a direct reference pixel from the plurality of sensor pixels corresponding to a direct region comprised within the reference area, wherein the direct region is located substantially beneath the movable heat source at the extended distance D; and control, over the duration of time, the temperature sensor to monitor the temperature of the direct reference region using the direct reference pixel;
- receive data defining the size and location of the sub-reference area 50A within the reference area 50;
- determine pixels of the sensor array corresponding to the sub-reference area 50A comprising the direct reference area, such that the first and second pixels, and optionally further pixels pairs, correspond to regions comprised within the sub-reference area;
- receive data defining the test position and the extended distance D, and potentially a sensor position to view the reference area 50;
- receive instructions of the location of pixel pairs within the sub-reference area, or rules allowing the controller 70 to select suitable pixel pairs from a plurality of possible pixel pairs, for example so as to select a pair from the same row of the pixel array using the rules described herein;
- receive a predetermined maximum temperature to be detected by the direct reference pixel; receive the outputs from the direct reference pixel over the duration of time over which the reference area is heated by the heat source 36, 20; and terminate step (d) of heating the reference area 50 when the temperature of the direct region reaches the predetermined maximum temperature, where the predetermined maximum temperature is chosen such that the onset of melting can be reached by the first and second pixels before the step of heating the reference area is terminated due to the reference pixel detecting the predetermined maximum temperature;
- determine at least one of the test positions and the extended distance such as to allow the direct reference pixel to detect the temperature of the corresponding direct reference region continuously over the duration of time;
- determine the test position and the extended distance to allow the first and second pixels of the reference pixel pair to detect the temperature of the first and second regions continuously over the duration of time;
- control the duration of time such that the material in the regions of the sub-reference area corresponding to the first and second pixels begins to melt. In other words, the controller 70 is configured to end the process of heating the reference area once the material of the first and second regions Vi, V_{R} has melted;
- apply the onset of melting, as determined from the temperature measurements taken over the duration of time the onset of melting from the evolution of the temperature difference between the first and second pixel, as the set point for subsequent temperature measurements of the temperature sensor.

Furthermore, the controller 70 may be arranged to control, or provide instructions to synchronise control of one or more of the functional elements of the apparatus:
- the operation and/or position of the heat source above the build bed surface;
- the power input(s) to the one or more heat source so as to create the temperature differential over the pair of locations such that the two pixels of the first reference pair detect different initial temperatures; and
- the image acquisition of the temperature sensor provided above the layer.

In variants in which the apparatus is a powder bed fusion apparatus such as illustrated in Figures 2, 6 and 7, the controller 70 may further be configured to control one or more of the operation and motion of a distributor to distribute the layer of particulate material to form the build bed surface; a build bed height controller to lower the build bed surface to the extended distance D; and a deposition module to deposit absorption modifying fluid on the build bed surface so as to define the reference area.

### Determination of onset of melting by extrapolation

It may be desirable to prevent the fusion of material in the reference area so as to avoid generating fused artefacts in the powder layers that are not part of an object. This for example allows more powder to be recycled and reused. In some variants of the method, the controller 70 may be configured to terminate the step of heating the reference area before the material in the first and second region melts; i.e. to control the duration of time to ensure that the material of the reference area 50 does not fuse. The method may therefore comprise, and the controller 70 may be configured to, receive a threshold temperature that corresponds to a minimum temperature of a range over which the onset of melting may be expected; compare the temperatures detected by the direct reference pixel to the threshold temperature; terminate the step of heating the reference area 50 when the temperature detected by the direct reference pixel equals the threshold temperature; extrapolate (fit, or simulate) the behaviour of temperature of the first and second regions Vi, V_{R} through and beyond the onset of melting based on a predetermined model of melting behaviour applied to the measured behaviour of temperature over the duration of time for the first and second regions Vi, V_{R} as detected by the first and second pixel Pi, P_{R}; determine the evolution of the temperature difference between the first and second regions Vi, V_{R} from the temperatures measured by the first and second pixel Pi, P_{R}, and from the extrapolated behaviour of temperature between the first and second regions Vi, V_{R}; and determine the onset of melting from the evolution of the temperature difference between the first and second regions Vi, V_{R}.

The range over which the onset of melting may be expected to occur may be determined from an earlier visual inspection of a melting process that is timed against monitoring the melting region with the temperature sensor. This leads to an approximation of the onset of melting. The threshold temperature may be a temperature chosen to lie below that range over which the onset of melting may be expected to occur. The predetermined model may be a model developed empirically using the methods described herein, and may be applied for subsequent extrapolations that allow the determination the onset of melting in the apparatus. This avoids fusing material over regions that are not part of an object.

### General considerations

More than one reference area 50 may be defined and fused, or melted, in the same routine while the sensor 72 monitors the temperature of all the defined reference areas. The reference areas may be arranged near the edges of the build bed or at regular intervals covering part or all of the build bed width along the direction of elongation of the heat source 36. In any of the above methods, the controller 70 may be configured to determine the onset of melting from temperature measurements by a plurality of pixel pairs corresponding to a plurality of first and second regions of the reference area (or sub-reference area), and from a plurality of reference areas (or sub-reference areas).

The expression "absorption-modifying fluid" refers to fluids that, when applied to particulate material, modify the absorption of radiation from the heat source by the particulate material, and thus the rate of heat absorption and melting. The radiation spectrum of the heat source 36 is chosen so that it is preferentially absorbed by the radiation-absorbing fluid. The reference area 50 thus heats up more rapidly than the area surrounding the reference area 50 and melts ahead of the surrounding area. Alternatively, the particulate material may comprise radiation-absorbing material that preferentially absorbs radiation from the spectrum of the heat source, and the fluid that is deposited inhibits absorption of the radiation spectrum emitted by the heat source. Such an absorption inhibitor may be deposited over the area surrounding the reference area 50, so that the reference area 50 heats up more rapidly than the area surrounding the reference area 50 and melts ahead of the surrounding area. The heat source 36, 20 to heat the reference area 50 may be an infrared lamp emitting a near infrared spectrum of radiation.

In the above embodiment and its variants, once the onset of melting has been determined, the onset of melting is applied as a set point for subsequent measurements by the sensor 72. This may comprise applying the set point to the scale of the corresponding temperature map of the sensor that indicated the onset of melting to a reference temperature, so that any subsequent temperature measurements made by the sensor are relative to the onset of melting. This calibrated scale takes into account changes in the properties of the particulate material due to recycling rate and/or ageing of at least some of the components of the particulate material. The onset of melting as measured by the temperature sensor of the apparatus may be set to an absolute temperature equal to the inherent onset of melting temperature. The absolute melting temperature may have been determined by a separate measurement outside of the apparatus using for example a calorimeter, such as a differential scanning calorimeter, to calibrate the sensor to an absolute temperature scale.

## Claims

1. A method for calibrating a temperature sensor in an apparatus for the layer-by-layer formation of a three-dimensional object from particulate material, the method comprising:
(a) distributing a layer of the particulate material to form a build bed surface (12);
(b) defining a reference area (50) within the build bed surface (12);
(c) providing a temperature sensor (72) and a heat source (20, 36) above the reference area (50), the temperature sensor (72) comprising a plurality of pixels configured to measure the temperature of the reference area (50);
(d) selecting a first pixel (P_{R}) and a second pixel (Pi) to form a first reference pair of pixels (P_{R}, Pᵢ) of the temperature sensor (72) to detect the temperature of corresponding first and second regions (V_{R}, Vi) within the reference area (50);
(e) operating the heat source (20, 36) to heat the reference area (50) over a duration of time, while monitoring, using the reference pair of pixels (P_{R}, Pi), the temperature of the two regions (V_{R}, Vi), wherein the heat source (20, 36) causes a temperature difference between the two regions (V_{R}, Vi) such that the first and second pixels (P_{R}, Pi) detect respective different temperatures over the duration of time; and
(f) determining the onset of melting of the particulate material from the evolution of the temperature difference over the duration of time; and
applying the onset of melting as determined in step (f) as a set point for subsequent measurements of the temperature sensor (72).

2. The method of claim 1, wherein step (b) further comprises selectively applying absorption-modifying fluid to the build bed surface (12) to define the reference area (50).

3. The method of claim 1 or claim 2, further comprising, before the step of distributing the layer of particulate material, the steps of
(i) distributing a base layer of particulate material over a build bed (14) to form the build bed surface (12);
(ii) applying radiation-absorbing fluid to a base reference area comprised in the base layer, wherein the base reference area overlaps at least partially with the reference area (50); and
(iii) melting the particulate material of the base reference area using the heat source (20, 36), and optionally repeating steps (i)-(iii) one or more times.

4. The method of any preceding claim, wherein the heat source is a moveable heat source (36), the method further comprising, before the step of operating the heat source (36) to heat the reference area (50) over the duration of time, the step of lowering the build bed surface (12) to an extended depth, wherein the extended depth defines an extended distance D between the heat source (36) and the build bed surface (12) which is greater than a build depth that defines a build distance at which an object is built.

5. The method of claim 4, wherein after the step of lowering the build bed surface (12) and before the step of applying heat to the reference area (50), the method further comprises the steps of:
moving the heat source (36) to a test position above the reference area (50) where at least a portion of the heat source (36) is in direct line of sight of the temperature sensor (72);
operating the heat source (36) so as to generate an image of the temperature of the heat source (36) above the build bed surface (12) using the temperature sensor (72); and
determining, based on the image generated by the temperature sensor (72), a direct reference pixel corresponding to a direct reference region within the reference area (50), wherein the direct reference region is located substantially beneath the heat source (36) at the extended distance D.

6. The method of claim 5, further comprising determining a sub-reference area (50A) comprising the direct reference region, wherein the pixel pair of the first and second pixels (P_{R}, Pi), and optionally further pixels pairs, correspond to regions comprised within the sub-reference area (50A).

7. The method of claim 5 or claim 6, wherein at least one of the test position and the extended distance D are determined so as to allow the direct reference pixel to detect the temperature of the direct reference region continuously over the duration of time.

8. The method of any one of claims 4 to 7, wherein the heat source (36) remains stationary in the test position for the duration of time of step (e) over which the reference area (50) is being heated.

9. The method of any one of claims 5 to 7, or of claim 8 when dependent on claim 5, further comprising, before step (e):
providing a predetermined maximum temperature; and
terminating step (e) of operating the heat source (36) to heat the reference area (50) when the predetermined maximum temperature is detected by the direct reference pixel, such that the duration of time is determined based on a predetermined maximum temperature detected by the direct reference pixel.

10. An apparatus for the layer-by-layer formation of a three-dimensional object from particulate material, the apparatus comprising:
a build bed surface (12) over which the object is to be formed;
a particulate material distributor for providing a layer of particulate material over the build bed surface (12);
a controller (70);
a heat source (20, 36) provided above the build bed surface (12); and
a temperature sensor (72) provided above the build bed surface (12), the temperature sensor (72) comprising a plurality of pixels configured to measure the temperature of the build bed surface (12);
wherein the temperature sensor (72) comprises a first pixel (P_{R}) and a second pixel (Pi) forming a first reference pair of pixels (P_{R}, Pi) arranged to detect the temperature of corresponding first and second regions (V_{R}, Vi) comprised within a reference area (50) within the layer of material, and the outputs of which are arranged to be supplied to the controller (70);
wherein the heat source (20, 36) is arranged to provide a temperature difference between the two regions (V_{R}, Vᵢ) such that the first and second pixels (P_{R}, Pi) detect respective different temperatures over the duration of time; and
wherein the controller (70) is configured to:
define the reference area (50) within the layer of material;
monitor the temperature of the first and second regions of the reference area (50);
determine the onset of melting from the evolution of the temperature difference between the first and second regions (V_{R}, Vi) over the duration of time; and
apply the determined onset of melting as a set point for subsequent measurements of the temperature sensor (72).

11. The apparatus of claim 10, wherein the sensor (72) comprises a plurality of pixel pairs (P_{R}, Pi) corresponding to a plurality of respective first and second regions (V_{R}, Vi) of the reference area (50); wherein the heat source (20, 36) is arranged to cause a unidirectional temperature differential across the reference area (50), and optionally wherein the temperature sensor (72) comprises an array (80) of pixel rows, wherein each row extends substantially parallel to the direction along which the unidirectional temperature differential subsists; and further optionally wherein two pixels of the first reference pair (P_{R}, Pi) are from the same row; and wherein the controller (70) is configured to determine the onset of melting based on the temperature sensor outputs for the plurality of pixel pairs (P_{R}, Pi).

12. The apparatus of claim 11, wherein the temperature sensor (72) comprises an array (80) of pixel rows, wherein each row extends substantially parallel to the direction along which the unidirectional temperature differential subsists; and wherein each pair of pixels (P_{R}, Pi) is from one of the pixel rows.

13. The apparatus of any one of claims 10 to 12, wherein the heat source is a moveable heat source (36) arranged to be moved across the build bed surface (12), and wherein at least a portion of the moveable heat source (36) is in line of sight of the temperature sensor (72) when the moveable heat source (36) is positioned in a test position above the build bed surface (12).

14. The apparatus of claim 13, wherein after lowering the build bed surface (12), the controller (70) is further configured to:
move the heat source (36) to a test position above the reference area (50) where at least a portion of the heat source (36) is in line of sight of the temperature sensor (72);
apply power to heat the heat source (36) so as to become visible to the temperature sensor (72);
cause the temperature sensor (72) to generate an image of the heat source (36) above the build bed surface (12); and
based on the image generated by the temperature sensor (72), determine a direct reference pixel from the plurality of sensor pixels corresponding to a direct reference region comprised within the reference area (50), wherein the direct reference region is located substantially beneath the heat source (36) at an extended distance D between the heat source (36) and the build bed surface (12) which is greater than a build depth that defines a build distance at which an object is built; and
control the temperature sensor (72) over the duration of time to monitor the temperature of the direct reference region using the direct reference pixel.

## Patentansprüche

1. Verfahren zum Kalibrieren eines Temperatursensors in einer Vorrichtung für die schichtweise Bildung eines dreidimensionalen Objekts aus Partikelmaterial, wobei das Verfahren umfasst:
(a) Verteilen einer Schicht aus Partikelmaterials, um eine Baubettoberfläche (12) zu bilden;
(b) Definieren eines Referenzbereichs (50) innerhalb der Baubettoberfläche (12);
(c) Bereitstellen eines Temperatursensors (72) und einer Heizquelle (20, 36) über dem Referenzbereich (50), wobei der Temperatursensor (72) eine Vielzahl von Pixeln umfasst, die zum Messen der Temperatur des Referenzbereichs (50) konfiguriert sind;
(d) Auswählen eines ersten Pixels (P_{R}) und eines zweiten Pixels (Pᵢ), um ein erstes Referenzpaar von Pixeln (P_{R}, Pᵢ) des Temperatursensors (72) zu bilden, um die Temperatur von entsprechenden ersten und zweiten Regionen (V_{R}, Vᵢ) innerhalb des Referenzbereichs (50) zu erfassen;
(e) Betreiben der Heizquelle (20, 36), um den Referenzbereich (50) über eine Zeitdauer zu erhitzen, während unter Verwendung des Referenzpaares von Pixeln (P_{R}, Pᵢ) die Temperatur der beiden Regionen (V_{R}, Vi) überwacht wird, wobei die Heizquelle (20, 36) eine Temperaturdifferenz zwischen den beiden Bereichen (V_{R}, Vi) bewirkt, so dass das erste und das zweite Pixel (P_{R}, Pi) jeweils unterschiedliche Temperaturen über die Zeitdauer erfassen; und
(f) Bestimmen des Schmelzbeginns des Partikelmaterials aus der Entwicklung der Temperaturdifferenz über die Zeitdauer; und
Anwendung des in Schritt (f) ermittelten Schmelzbeginns als Sollwert für nachfolgende Messungen des Temperatursensors (72).

2. Das Verfahren nach Anspruch 1, wobei Schritt (b) ferner das selektive Aufbringen eines absorptionsmodifizierenden Fluids auf die Baubettoberfläche (12) umfasst, um den Referenzbereich (50) zu definieren.

3. Das Verfahren nach Anspruch 1 oder 2, das vor dem Schritt des Verteilens der Schicht aus Partikelmaterial außerdem die folgenden Schritte umfasst
(i) Verteilen einer Basisschicht aus Partikelmaterial über ein Baubett (14), um die Baubettoberfläche (12) zu bilden;
(ii) Aufbringen von strahlungsabsorbierendem Fluid auf einen in der Basisschicht enthaltenen Basisreferenzbereich, wobei der Basisreferenzbereich zumindest teilweise mit dem Referenzbereich (50) überlappt; und
(iii) Schmelzen des Partikelmaterials des Basisreferenzbereichs unter Verwendung der Heizquelle (20, 36) und gegebenenfalls ein- oder mehrmaliges Wiederholen der Schritte (i)-(iii).

4. Das Verfahren nach einem der vorhergehenden Ansprüche, wobei die Heizquelle eine bewegliche Heizquelle (36) ist, wobei vor dem Schritt des Betreibens der Heizquelle (36) zum Erwärmen des Referenzbereichs (50) über die Zeitdauer das Verfahren ferner den Schritt des Absenkens der Baubettoberfläche (12) auf eine erweiterte Tiefe umfasst, wobei die erweiterte Tiefe einen erweiterten Abstand D zwischen der Heizquelle (36) und der Baubettoberfläche (12) definiert, der größer ist als eine Bautiefe, die einen Bauabstand definiert, bei dem ein Objekt gebaut wird.

5. Das Verfahren nach Anspruch 4, wobei das Verfahren nach dem Schritt des Absenkens der Baubettoberfläche (12) und vor dem Schritt des Aufbringens von Hitze auf den Referenzbereich (50) außerdem die folgenden Schritte umfasst:
Bewegen der Heizquelle (36) in eine Testposition oberhalb des Referenzbereichs (50), in der sich zumindest ein Teil der Heizquelle (36) in direkter Sichtlinie des Temperatursensors (72) befindet;
Betreiben der Heizquelle (36), um mit Hilfe des Temperatursensors (72) ein Bild der der Heizquelle (36) über der Baubettoberfläche (12) zu erzeugen; und
Bestimmen eines auf der Grundlage des von dem Temperatursensor (72) erzeugten Bildes direkten Referenzpixels, das einer direkten Referenzregion innerhalb des Referenzbereichs (50) entspricht, wobei sich die direkte Referenzregion im Wesentlichen unterhalb der Heizquelle (36) in dem erweiterten Abstand D befindet.

6. Das Verfahren nach Anspruch 5, das ferner das Bestimmen eines Unterreferenzbereichs (50A) umfasst, der die direkte Referenzregion umfasst, wobei das Pixelpaar des ersten und zweiten Pixels (P_{R}, Pᵢ) und optional weitere Pixelpaare Regionen entsprechen, die innerhalb des Unterreferenzbereichs (50A) enthalten sind.

7. Das Verfahren nach Anspruch 5 oder Anspruch 6, wobei die Testposition und/ oder der erweiterte Abstand D so bestimmt werden, dass das direkte Referenzpixel die Temperatur der direkten Referenzregion über die gesamte Zeitdauer kontinuierlich erfassen kann.

8. Das Verfahren nach einem der Ansprüche 4 bis 7, wobei die Heizquelle (36) während der Zeitdauer von Schritt (e), in dem der Referenzbereich (50) erhitzt wird, in der Testposition stationär bleibt.

9. Das Verfahren nach einem der Ansprüche 5 bis 7 oder nach Anspruch 8, wenn er von Anspruch 5 abhängt, das außerdem vor Schritt (e) umfasst:
Bereitstellen einer vorgegebenen Höchsttemperatur; und
Beenden des Schritts (e) des Betreibens der Heizquelle (36), um den Referenzbereich (50) zu erwärmen, wenn die vorgegebene Höchsttemperatur durch das direkte Referenzpixel erfasst wird, so dass die Zeitdauer auf der Grundlage einer durch das direkte Referenzpixel erfasste vorgegebenen Höchsttemperatur bestimmt wird.

10. Vorrichtung zur schichtweisen Bildung eines dreidimensionalen Objekts aus Partikelmaterial, wobei die Vorrichtung umfasst:
eine Baubettoberfläche (12), auf der das Objekt gebildet werden soll;
einen Partikelmaterialverteiler zur Bereitstellung einer Schicht aus Partikelmaterial über der Baubettoberfläche (12);
eine Steuerung (70);
eine Heizquelle (20, 36), die oberhalb der Baubettoberfläche (12) vorgesehen ist; und
einen Temperatursensor (72), der oberhalb der Baubettoberfläche (12) vorgesehen ist, wobei der Temperatursensor (72) eine Vielzahl von Pixeln umfasst, die zum Messen der Temperatur der Baubettoberfläche (12) konfiguriert sind;
wobei der Temperatursensor (72) ein erstes Pixel (P_{R}) und ein zweites Pixel (Pi) umfasst, die ein erstes Referenzpaar von Pixeln (P_{R}, Pi) bilden, die so angeordnet sind, dass sie die Temperatur entsprechender erster und zweiter Regionen (V_{R}, Vi) erfassen, die in einem Referenzbereich (50) innerhalb der Materialschicht enthalten sind, und deren Ausgangssignale so angeordnet sind, dass sie der Steuerung (70) zugeführt werden;
wobei die Heizquelle (20, 36) so angeordnet ist, dass sie eine Temperaturdifferenz zwischen den beiden Regionen (V_{R}, Vi) bereitstellt, so dass die ersten und zweiten Pixel (P_{R}, Pi) über die Zeitdauer jeweils unterschiedliche Temperaturen erfassen; und
wobei die Steuerung (70) so konfiguriert ist, dass sie:
den Referenzbereich (50) innerhalb der Materialschicht definiert,
die Temperatur der ersten und zweiten Region des Referenzbereichs (50) überwacht;
den Schmelzbeginn aus der Entwicklung der Temperaturdifferenz zwischen der ersten und der zweiten Region (V_{R}, Vi) über die Zeitdauer bestimmt; und
den ermittelten Schmelzbeginn als Sollwert für nachfolgende Messungen des Temperatursensors verwendet (72).

11. Die Vorrichtung nach Anspruch 10, wobei der Sensor (72) eine Vielzahl von Pixelpaaren (P_{R}, Pᵢ) umfasst, die einer Vielzahl von jeweiligen ersten und zweiten Regionen (V_{R}, Vi) des Referenzbereichs (50) entsprechen; wobei die Heizquelle (20, 36) so angeordnet ist, dass sie ein unidirektionales Temperaturdifferential über den Referenzbereich (50) verursacht, und wobei der Temperatursensor (72) optional ein Array (80) von Pixelreihen umfasst, wobei sich jede Reihe im Wesentlichen parallel zu der Richtung erstreckt, entlang der das unidirektionale Temperaturdifferential besteht; und ferner optional, wobei zwei Pixel des ersten Referenzpaares (P_{R}, Pᵢ) aus derselben Reihe stammen; und wobei die Steuerung (70) konfiguriert ist, den Schmelzbeginn auf der Grundlage der Temperatursensorausgänge für die Vielzahl von Pixelpaaren (P_{R}, Pi) zu bestimmen.

12. Die Vorrichtung nach Anspruch 11, wobei der Temperatursensor (72) ein Array (80) von Pixelreihen umfasst, wobei sich jede Reihe im Wesentlichen parallel zu der Richtung erstreckt, entlang der das unidirektionale Temperaturdifferential besteht; und wobei jedes Pixelpaar (P_{R}, Pi) aus einer der Pixelreihen stammt.

13. Die Vorrichtung nach einem der Ansprüche 10 bis 12, wobei die Heizquelle eine bewegliche Heizquelle (36) ist, die so angeordnet ist, dass sie über die Baubettoberfläche (12) bewegt werden kann, und wobei mindestens ein Teil der beweglichen Heizquelle (36) in Sichtlinie des Temperatursensors (72) liegt, wenn die bewegliche Heizquelle (36) in einer Testposition über der Baubettoberfläche (12) positioniert ist.

14. Die Vorrichtung nach Anspruch 13, wobei die Steuerung (70) nach dem Absenken der Baubettoberfläche (12) ferner so konfiguriert ist, dass sie:
die Heizquelle (36) in eine Testposition, in der sich zumindest ein Teil der Heizquelle (36) in Sichtlinie des Temperatursensors (72) befindet, oberhalb des Referenzbereichs (50) bewegt,
Strom an die Heizquelle (36) anlegt, um sie zu erhitzen, so dass sie für den Temperatursensor (72) sichtbar wird;
den Temperatursensor (72) veranlasst, ein Bild der Heizquelle (36) über der Baubettoberfläche (12) zu erzeugen; und
auf der Grundlage des von dem Temperatursensor (72) erzeugten Bildes ein direktes Referenzpixel aus der Vielzahl von Sensorpixeln bestimmt, das einem direkten Referenzbereich entspricht, der in dem Referenzbereich (50) enthalten ist, wobei sich der direkte Referenzbereich im Wesentlichen unterhalb der Heizquelle (36) in einem erweiterten Abstand D zwischen der Heizquelle (36) und der Baubettoberfläche (12) befindet, der größer als eine Bautiefe ist, die einen Bauabstand definiert, in dem ein Objekt gebaut wird; und
den Temperatursensor (72) über die Zeitdauer steuert, um die Temperatur des direkten Referenzbereichs unter Verwendung des direkten Referenzpixels zu überwachen.

## Revendications

1. Procédé d'étalonnage d'un capteur de température dans un appareil de formation couche par couche d'un objet tridimensionnel à partir d'un matériau particulaire, le procédé consistant à :
(a) distribuer une couche de matière particulaire pour former une surface de lit de fabrication (12) ;
(b) définir une zone de référence (50) sur la surface de lit de fabrication (12) ;
(c) situer un capteur de température (72) et une source de chaleur (20, 36) au-dessus de la zone de référence (50), le capteur de température (72) comprenant une pluralité de pixels configurés pour mesurer la température de la zone de référence (50) ;
(d) sélectionner un premier pixel (P_{R}) et un second pixel (Pᵢ) pour former une première paire de pixels de référence (P_{R}, Pᵢ) du capteur de température (72) afin de détecter la température de première et seconde régions correspondantes (V_{R}, Vᵢ) dans la zone de référence (50) ;
(e) faire fonctionner la source de chaleur (20, 36) pour chauffer la zone de référence (50) pendant une certaine durée, tout en surveillant, au moyen de la paire de pixels de référence (P_{R}, Pᵢ), la température des deux régions (V_{R}, Vᵢ), la source de chaleur (20, 36) provoquant une différence de température entre les deux régions (V_{R}, Vᵢ) de telle sorte que les premier et second pixels (P_{R}, Pᵢ) détectent des températures différentes respectives pendant la durée ; et
(f) déterminer le début de la fusion de la matière particulaire à partir de l'évolution de la différence de température pendant la durée ; et
appliquer le début de la fusion déterminé à l'étape (f) comme point de consigne pour des mesures ultérieures du capteur de température (72).

2. Procédé selon la revendication 1, dans lequel l'étape (b) consiste en outre à appliquer de manière sélective un fluide modifiant l'absorption sur la surface de lit de fabrication (12) afin de définir la zone de référence (50).

3. Procédé selon la revendication 1 ou 2, comprenant en outre, avant l'étape de distribution de la couche de matériau particulaire, les étapes consistant à :
(i) distribuer une couche de base de matériau particulaire sur un lit de fabrication (14) afin de former la surface de lit de fabrication (12) ;
(ii) appliquer un fluide absorbant les radiations sur une zone de référence de base comprise dans la couche de base, la zone de référence de base chevauchant au moins en partie la zone de référence (50) ; et
(iii) faire fondre le matériau particulaire de la zone de référence de base au moyen de la source de chaleur (20, 36), et éventuellement répéter les étapes (i) à (iii) une ou plusieurs fois.

4. Procédé selon l'une quelconque des revendications précédentes, dans lequel la source de chaleur est une source de chaleur mobile (36), le procédé comprenant en outre, avant l'étape consistant à faire fonctionner la source de chaleur (36) pour chauffer la zone de référence (50) pendant la durée, l'étape consistant à abaisser la surface de lit de fabrication (12) à une profondeur étendue, la profondeur étendue définissant une distance étendue D entre la source de chaleur (36) et la surface de lit de fabrication (12) qui est supérieure à une profondeur de fabrication qui définit une distance de fabrication à laquelle un objet est fabriqué.

5. Procédé selon la revendication 4, le procédé comprenant en outre, après l'étape consistant à abaisser la surface de lit de fabrication (12) et avant l'étape consistant à appliquer de la chaleur à la zone de référence (50), les étapes consistant à :
déplacer la source de chaleur (36) vers une position d'essai au-dessus de la zone de référence (50) où au moins une partie de la source de chaleur (36) est en ligne de mire directe du capteur de température (72) ;
faire fonctionner la source de chaleur (36) de manière à générer une image de la température de la source de chaleur (36) au-dessus de la surface de lit de fabrication (12) au moyen du capteur de température (72) ; et
déterminer, sur la base de l'image générée par le capteur de température (72), un pixel de référence directe correspondant à une région de référence directe dans la zone de référence (50), la région de référence directe étant située sensiblement sous la source de chaleur (36) à la distance étendue D.

6. Procédé selon la revendication 5, consistant en outre à déterminer une sous-zone de référence (50A) comprenant la région de référence directe, dans laquelle la paire de pixels des premier et second pixels (P_{R}, Pᵢ), et éventuellement d'autres paires de pixels, correspond à des régions comprises dans la sous-zone de référence (50A).

7. Procédé selon la revendication 5 ou 6, dans lequel la position d'essai et/ou la distance étendue D sont déterminées de manière à permettre au pixel de référence directe de détecter la température de la région de référence directe de manière continue pendant la durée.

8. Procédé selon l'une quelconque des revendications 4 à 7, dans lequel la source de chaleur (36) reste immobile dans la position d'essai pendant la durée de l'étape (e) au cours de laquelle la zone de référence (50) est chauffée.

9. Procédé selon l'une quelconque des revendications 5 à 7 ou selon la revendication 8 lorsqu'elle dépend de la revendication 5, consistant en outre, avant l'étape (e), à :
fournir une température maximale prédéterminée ; et
mettre fin à l'étape (e) consistant à faire fonctionner la source de chaleur (36) pour chauffer la zone de référence (50) lorsque la température maximale prédéterminée est détectée par le pixel de référence directe, de telle sorte que la durée soit déterminée sur la base d'une température maximale prédéterminée détectée par le pixel de référence directe.

10. Appareil de formation couche par couche d'un objet tridimensionnel à partir d'un matériau particulaire, l'appareil comprenant :
une surface de lit de fabrication (12) sur laquelle l'objet doit être formé ;
un distributeur de matériau particulaire pour fournir une couche de matériau particulaire sur la surface de lit de fabrication (12) ;
un dispositif de commande (70) ;
une source de chaleur (20, 36) située au-dessus de la surface de lit de fabrication (12) ; et
un capteur de température (72) situé au-dessus de la surface de lit de fabrication (12), le capteur de température (72) comprenant une pluralité de pixels configurés pour mesurer la température de la surface de lit de fabrication (12) ;
le capteur de température (72) comprenant un premier pixel (P_{R}) et un second pixel (Pᵢ) formant une première paire de pixels de référence (P_{R}, Pᵢ) conçus pour détecter la température de première et seconde régions correspondantes (V_{R}, Vᵢ) comprises dans une zone de référence (50) dans la couche de matériau, et dont les sorties sont conçues pour être fournies au dispositif de commande (70) ;
la source de chaleur (20, 36) étant conçue pour fournir une différence de température entre les deux régions (V_{R}, Vᵢ) de telle sorte que les premier et second pixels (P_{R}, Pᵢ) détectent des températures différentes respectives pendant la durée ; et
le dispositif de commande (70) étant configuré pour :
définir la zone de référence (50) dans la couche de matériau ;
surveiller la température des première et seconde régions de la zone de référence (50) ;
déterminer le début de la fusion à partir de l'évolution de la différence de température entre les première et seconde régions (V_{R}, Vᵢ) pendant la durée ; et
appliquer le début déterminé de la fusion comme point de consigne pour des mesures ultérieures du capteur de température (72).

11. Appareil selon la revendication 10, dans lequel le capteur (72) comprend une pluralité de paires de pixels (P_{R}, Pᵢ) correspondant à une pluralité de premières et secondes régions (V_{R}, Vᵢ) respectives de la zone de référence (50) ; dans lequel la source de chaleur (20, 36) est conçue pour provoquer un différentiel unidirectionnel de température à travers la zone de référence (50), et éventuellement dans lequel le capteur de température (72) comprend un réseau (80) de rangées de pixels, chaque rangée s'étendant sensiblement parallèlement à la direction selon laquelle le différentiel unidirectionnel de température subsiste ; et encore éventuellement dans lequel deux pixels de la première paire de référence (P_{R}, Pᵢ) appartiennent à la même rangée ; et dans lequel le dispositif de commande (70) est configuré pour déterminer le début de la fusion sur la base des sorties de capteur de température pour la pluralité de paires de pixels (P_{R}, Pᵢ).

12. Appareil selon la revendication 11, dans lequel le capteur de température (72) comprend un réseau (80) de rangées de pixels, chaque rangée s'étendant sensiblement parallèlement à la direction selon laquelle le différentiel unidirectionnel de température subsiste ; et dans lequel chaque paire de pixels (P_{R}, Pᵢ) appartient à une des rangées de pixels.

13. Appareil selon l'une quelconque des revendications 10 à 12, dans lequel la source de chaleur est une source de chaleur mobile (36) conçue pour être déplacée sur la surface de lit de fabrication (12), et dans lequel au moins une partie de la source de chaleur mobile (36) est en ligne de mire du capteur de température (72) lorsque la source de chaleur mobile (36) est positionnée dans une position d'essai au-dessus de la surface de lit de fabrication (12).

14. Appareil selon la revendication 13, dans lequel, après avoir abaissé la surface de lit de fabrication (12), le dispositif de commande (70) est en outre configuré pour :
déplacer la source de chaleur (36) vers une position d'essai au-dessus de la zone de référence (50) où au moins une partie de la source de chaleur (36) est en ligne de mire du capteur de température (72) ;
appliquer de l'énergie pour chauffer la source de chaleur (36) afin qu'elle devienne visible pour le capteur de température (72) ;
amener le capteur de température (72) à générer une image de la source de chaleur (36) au-dessus de la surface de lit de fabrication (12) ; et
sur la base de l'image générée par le capteur de température (72), déterminer un pixel de référence directe parmi la pluralité de pixels de capteur correspondant à une région de référence directe comprise dans la zone de référence (50), la région de référence directe étant située sensiblement sous la source de chaleur (36) à une distance étendue D entre la source de chaleur (36) et la surface de lit de fabrication (12) qui est supérieure à une profondeur de fabrication qui définit une distance de fabrication à laquelle un objet est fabriqué ; et
commander le capteur de température (72) pendant la durée pour surveiller la température de la région de référence directe au moyen du pixel de référence directe.
